# EUROPEAN PATENT SPECIFICATION

(11) **EP 4 439 551 B1**
(45) Date of publication and mention of the grant of the patent: **12.08.2026**
(21) Application number: 22914758.2
(22) Date of filing: 27.12.2022
(51) Int. Cl.: G06N 3/045, G06N 3/08, G10L 15/16, G10L 15/26, G06N 3/02, G10L 15/02, G10L 25/30

(54) **KEYWORD DETECTION METHOD AND APPARATUS, AND ELECTRONIC DEVICE AND STORAGE MEDIUM**
VERFAHREN UND VORRICHTUNG ZUR SCHLÜSSELWORTERKENNUNG SOWIE ELEKTRONISCHE VORRICHTUNG UND SPEICHERMEDIUM
PROCÉDÉ ET APPAREIL DE DÉTECTION DE MOT-CLÉ, DISPOSITIF ÉLECTRONIQUE ET SUPPORT DE STOCKAGE

(30) Priority: 31.12.2021 CN 202111664577
(43) Date of publication of application: 02.10.2024
(73) Proprietor: Beijing Zitiao Network Technology Co., Ltd., Beijing 100190 (CN)
(72) Inventor: JIANG, Yongsen, Beijing 100086 (CN)
(74) Representative: Marks & Clerk LLP
(86) International application number: PCT/CN2022/142232
(87) International publication number: WO 2023/125504

(56) References cited:
- EP-A1- 3 792 911
- CN-A- 108 615 526
- CN-A- 110 414 450
- CN-A- 110 895 936
- CN-A- 111 210 822
- US-A1- 2020 066 271
- YAN HAIKANG ET AL: "Crnn-Ctc Based Mandarin Keywords Spotting", ICASSP 2020 - 2020 IEEE INTERNATIONAL CONFERENCE ON ACOUSTICS, SPEECH AND SIGNAL PROCESSING (ICASSP), IEEE, 4 May 2020 (2020-05-04), pages 7489 - 7493, XP033794277, DOI: 10.1109/ICASSP40776.2020.9054618

## Description

### FIELD OF THE INVENTION

The present disclosure relates to the field of information technology, and in particular, to a keyword detection method and apparatus, an electronic device, and a storage medium.

### BACKGROUND

With development of voice recognition technology and continuous promotion of intelligent voice devices, recognizing a preset keyword contained in the audio becomes an operation that needs to be performed in many scenarios.

The current keyword detection technology generally detects a piece of audio in a sliding window manner.

EP 3792911A discloses a method for detecting a key term in a speech signal, the method comprises: extracting a speech feature vector of a speech signal; acquiring the posterior probabilities of target characters in the speech signal on the basis of the speech feature vector, the posterior probabilities referring to the posterior probabilities of the target characters being a keyword in any key term in a period during which the speech signal is captured, the target characters being characters of which the pronunciation matches that of the keyword; acquiring the degrees of confidence of at least two target character combinations on the basis of the posterior probabilities of the target characters, each target character combination comprising at least one target character, the degrees of confidence expressing the probability of each target character combination being the key term or a part of the key term; and when the degrees of confidence of the at least two target character combinations comply with a preset criterion, determining that the speech signal comprises the key term.

### DISCLOSURE OF THE INVENTION

Embodiments of the present disclosure provide a keyword detection method and apparatus, an electronic device, and a storage medium.

In a first aspect, an embodiment of the present disclosure provides a keyword detection method according to claim 1.

In a second aspect, an embodiment of the present disclosure further provides a keyword detection apparatus according to claim 6.

In a third aspect, an embodiment of the present disclosure further provides an electronic device, including:
one or more processors;
a storage device, configured to store one or more programs;
wherein the one or more programs, when executed by the one or more processors, cause the one or more processors to implement the keyword detection method as described above.

In a fourth aspect, an embodiment of the present disclosure further provides a computer-readable storage medium, on which a computer program is stored, wherein the program, when executed by a processor, implements the keyword detection method as described above.

### DESCRIPTION OF THE DRAWINGS

The above and other features, advantages and aspects of the embodiments of the present disclosure will become more apparent with reference to the accompanying drawings and with reference to the following detailed description. Throughout the drawings, the same or similar reference numerals indicate the same or similar elements. It should be understood that the drawings are schematic and that the components and elements are not necessarily drawn to scale.
FIG. 1 is a flowchart of a keyword detection method according to an embodiment of the present disclosure;
FIG. 2 is a schematic structural diagram of a keyword detection apparatus according to an embodiment of the present disclosure;
FIG. 3 is a schematic structural diagram of an electronic device according to an embodiment of the present disclosure.

### DETAILED DESCRIPTION OF PREFERRED EMBODIMENTS

Embodiments of the present disclosure will be described with reference to the drawings in detail. Although some embodiments of the present disclosure have been illustrated in the drawings, it shall be understood that the present disclosure can be implemented in a variety of manners, and shall not be interpreted as being limited to the embodiments illustrated herein, on the contrary, these embodiments are provided for the purpose of more thoroughly and completely understanding the present disclosure. It shall be understood that the drawings and embodiments of the present disclosure are only used for illustration, and do not constitute a limitation on the present disclosure.

It should be understood that the various steps described in the method embodiments of the present disclosure may be performed in different orders, and/or performed in parallel. Furthermore, the method embodiments can include additional steps, and/or the execution of the illustrated steps may be omitted. The scope of the present disclosure is not limited in this respect.

The term "include" and the variations thereof used in the present disclosure are open-ended terms, that is, "including but not limited to". The term "one embodiment" means "at least one embodiment"; the term "another embodiment" means "at least one further embodiment"; the term "some embodiments" means " at least some embodiments". Related definitions of other terms will be given hereinafter.

It should be noted that concepts such as "first" and "second" mentioned in the present disclosure are only used to distinguish different apparatuses, modules, or units, instead of being used to limit the sequence or interdependence of functions performed by these apparatuses, modules, or units.

It should be noted that the modifiers "one" and "a plurality of" mentioned in the present disclosure are schematic and non-limiting, and those skilled in the art shall understand that, unless otherwise clearly indicated in the context, it should be understood as "one or more".

The names of messages or information exchanged between the plurality of apparatuses in embodiments of the present disclosure are for illustrative purposes only and are not intended to limit the scope of the messages or information.

The current keyword detection technology generally detects a piece of audio in a sliding window manner. There may exist problems of repeated computation for certain audio and high computational complexity in this manner.

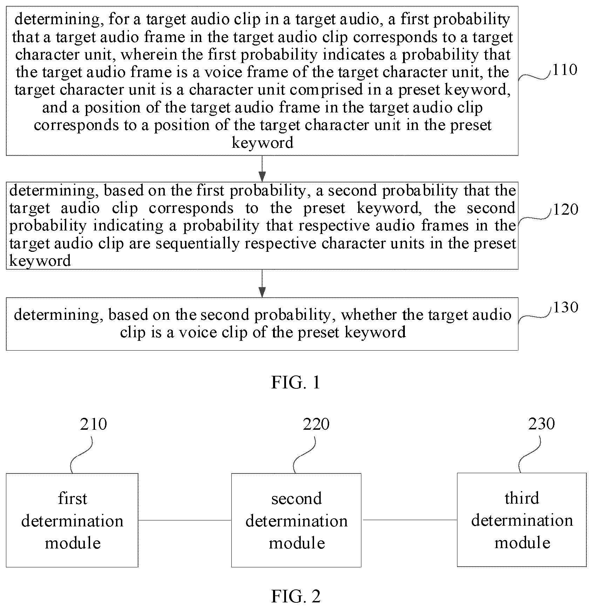

FIG. 1 is a flowchart of a keyword detection method according to an embodiment of the present disclosure. The method is applicable to detect a preset keyword in an audio, and may be executed by a keyword detection apparatus, and the apparatus may be implemented by using software and/or hardware, and the apparatus may be configured in an electronic device, for example, a terminal or a server. The terminal specifically includes, but not limited to, a smartphone, a palmtop computer, a tablet computer, a portable wearable device, a smart home device (for example, a desk lamp), and the like.

As shown in FIG. 1, the method may specifically include the following steps:
Step 110: determining, for a target audio clip in a target audio, a first probability that a target audio frame in the target audio clip corresponds to a target character unit.

Wherein, the target audio clip is a piece of audio in the target audio. The first probability indicates a probability that the target audio frame is a voice frame of the target character unit, the target character unit is a character unit comprised in a preset keyword, and a position of the target audio frame in the target audio clip corresponds to a position of the target character unit in the preset keyword.

For example, the preset keyword is "da kai men ( 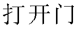 )" that includes three character units, which are "da( 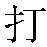 )", "kai( 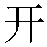 )" and "men( 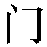 )" respectively. The "da" is labelled as a first character unit, the "kai" is labelled as a second character unit, the "men" is labelled as a third character unit, and the target character unit is a specific character unit in the three character units. If the target audio clip includes three audio frames, respectively a first audio frame, a second audio frame, and a third audio frame, and the target audio frame is a specific one of the three audio frames. When the first audio frame corresponds to the voice frame of the first character unit "da", the second audio frame corresponds to the voice frame of the second character unit "kai", and the third audio frame corresponds to the voice frame of the third character unit "men", it can be determined that the target audio clip is the voice clip of the preset keyword "da kai men". In other words, a position of the target audio frame in the target audio clip corresponds to a position of the target character unit in the preset keyword.

If the audio language in the target audio frame is Chinese, the character unit may be a Chinese character, specifically any one of 5000 commonly used Chinese characters. The target character unit is a character unit included in the preset keyword, for example, the preset keyword is "da kai deng guan ( 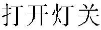 )", and the target character units are "da ( 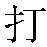 )", "kai ( 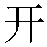 )", "deng ( 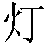 )" or "guan ( 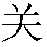 )".

If the audio language in the audio frame is English, the character unit may be a syllable.

Optionally, the determining a first probability that a target audio frame in the target audio clip corresponds to a target character unit may include: determining an audio feature of the target audio frame; and inputting the audio feature into a trained neural network model to obtain the first probability that the target audio frame corresponds to the target character unit.

Optionally, taking the audio language in the target audio frame is Chinese, the preset keyword is "da kai deng guan ( 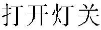 )", and the target character units are "da ( 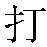 )", "kai ( 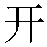 )", "deng ( 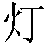 )" or "guan ( 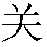 )" as an example. The output of the neural network model is the probability that each target audio frame corresponds to "da", "kai", "deng " or "guan" respectively, that is, there are four results for one target audio frame, which are respectively a first probability p(da) corresponding to "da", the first probability p(kai) corresponding to the "kai", the first probability p(deng) corresponding to the "deng", and the first probability p(guan) corresponding to the "guan".

In some optional embodiments, the output of the neural network model may also be a first probability that each target audio frame respectively corresponds to 5000 Chinese characters commonly used in the dictionary, that is, there are 5000 results for one target audio frame, and P (t,i) may be used to indicate a first probability that a target audio frame t corresponds to the i-th Chinese character, where t represents the t-th audio frame in the target audio clip, and i represents the i-th Chinese character.

The audio feature may include, for example, **fbank** feature and **mfcc** features, where **mfcc** feature may be obtained from **fbank** feature by performing discrete cosine transformation thereon. The **fbank** feature may be obtained from the audio frame by performing windowing- Fourier transformation -filtering thereon.

Step 120: determine, based on the first probability, a second probability that the target audio clip corresponds to the preset keyword, the second probability indicating a probability that respective audio frames in the target audio clip are sequentially respective character units in the preset keyword.

It is assumed that the target audio clip includes three audio frames, which are respectively a first audio frame, a second audio frame, and a third audio frame. The preset keyword is "da kai men ( 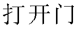 )" that includes three character units, which are "da( 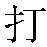 )", "kai( 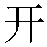 )" and "men( 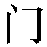 )" respectively. The "da" is labelled as a first character unit, the "kai" is labelled as a second character unit, the "men" is labelled as a third character unit. The second probability indicates a probability that the first audio frame corresponds to the voice frame of the first character unit "da", the second audio frame corresponds to the voice frame of the second character unit "kai", and the third audio frame corresponds to the voice frame of the third character unit "men". That is, the second probability indicates the probability that respective audio frames in the target audio clip are sequentially respective character units in the preset keyword.

It may be understood that, if the frequency for acquiring audio frames is relatively high and the preset keyword is relatively long, that is, the preset keyword includes more target character units, and a single audio frame is insufficient to include the preset keyword, the preset keyword will be detected according to a plurality of consecutive audio frames; and if the frequency for acquiring audio frames is relatively low and the preset keyword is relatively short, a single audio frame may include a complete preset keyword, detection of the preset keyword is implemented according to one audio frame.

In some implementations, the determining, based on the first probability, a second probability that the target audio clip corresponds to the preset keyword, may include:
(1) determining a first probability that a target audio frame corresponds to a last target character unit in the preset keyword; (2) determining a maximum value of confidences of a second-from-bottom target character unit in the preset keyword appearing in an audio frame before the target audio frame in the target audio clip; and (3) determining the sum of the maximum value and the first probability that the target audio frame corresponds to the last target character unit in the preset keyword as the second probability, wherein the target audio frame is any audio frame in the target audio clip.

For example, the preset keyword is "da kai deng guan ( 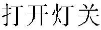 )", and the target character units forming the preset keyword are "da ( 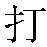 )", "kai ( 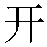 )", "deng ( 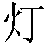 )" or "guan ( 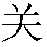 )"respectively, that is, four target character units, wherein the target character unit "da" is a first target character unit in the preset keyword, the target character unit " kai" is a second target character unit in the preset keyword, the target character unit "deng" is a third target character unit in the preset keyword, and the target character unit "guan" is a fourth target character unit in the preset keyword.

In other words, the target character unit "guan" is the last target character unit in the preset keyword, the target character unit "deng" is the second-from-bottom target character unit in the preset keyword, or the target character unit "deng" is the neighbor target character unit before the target character unit "guan", and the target character unit "deng" is located before and adjacent to the target character unit "guan", so the target character unit "deng" is the neighbor target character unit before the target character unit "guan".

For example, it is assumed that there are T consecutive audio frames in the target audio clip, the target audio frame is the t-th audio frame, the preset keyword is "da kai deng guan ( 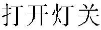 )", and a plurality of target character units forming the preset keyword are "da ( 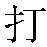 )", "kai ( 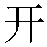 )", "deng ( 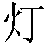 )" or "guan ( 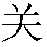 )"respectively, that is, four target character units, wherein the target character unit "guan" is the last target character unit in the preset keyword. An array w [i] can be utilized to present each target character unit forming the preset keyword, in the exemplary scenario, i ranges from 1 to 4, when i = 1, w [i] represents the first target character unit "da", when i = 2, w [i] represents the second target character unit "kai", when i = 3, w [i] represents the third target character unit "deng", and i = 4, w [i] represents the fourth target character unit "guan". In the foregoing exemplary scenario, it is determined that the first probability that the target audio frame corresponds to the last target character unit in the preset keyword is P (t, W [4]). Specifically, the audio feature of the t-th audio frame is input to a trained neural network model, to obtain the first probability P (t, w [4]) of the t-th audio frame corresponding to the target character unit "guan". That is, the above (1) determines that the first probability of the target audio frame corresponding to the last target character unit in the preset keyword is P (t, W [4]).

For the above (2), it is determined a maximum value of confidences of a second-from-bottom target character unit in the preset keyword appearing in an audio frame before the target audio frame in the target audio clip: the essence of this step is that assuming the last target character unit (e.g., "guan") in the preset keyword appears in the target audio frame (i.e. the t-th audio frame), it is necessary to determine which audio frame the second-from-bottom target character unit (e.g., "deng") in the preset keyword appears. After it is determined which audio frame the second-from-bottom target character unit in the preset keyword appears, it is also necessary to further determine which audio frame the third-from-bottom target character unit (e.g. "kai") in the preset keyword appears, until it is determined which audio frame each target character unit in the preset keyword appears. Specifically, the confidence of a second-from-bottom target character unit in the preset keyword appearing in each audio frame before the target audio frame is the sum of a target maximum value and a target probability. The target maximum value is a maximum value among confidences of a third-from-bottom target character unit (that is, a neighbor target character unit before the second-from-bottom target character unit) in the preset keyword appearing in each previous audio frame, and the target probability is a probability that the target audio frame corresponds to a second-from-bottom target character unit in the preset keyword.

In summary, a confidence of one target character unit in the preset keyword appearing in the audio frame is a sum of a target maximum value and a target probability; the target maximum value is a maximum value among confidences of neighbor target character units before the one target character unit in the preset keyword appearing in each audio frame before the audio frame, and the target probability is a first probability that the audio frame corresponds to the target character unit. In this way, the confidence that the target character unit appears in the first audio frame in the target audio clip is the first probability that the first audio frame corresponds to the target character unit.

Assuming that the preset keyword is "da kai deng guan ( 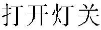 )", and a plurality of target character units forming the preset keyword are "da ( 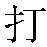 )", "kai ( 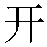 )", "deng ( 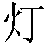 )" or "guan ( 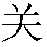 )"respectively, that is, four target character units, an array w [i] can be utilized to present each target character unit forming the preset keyword, in the exemplary scenario, i ranges from 1 to 4, when i = 1, w [i] represents the first target character unit "da", when i = 2, w [i] represents the second target character unit "kai", when i = 3, w [i] represents the third target character unit "deng", and i = 4, w [i] represents the fourth target character unit "guan".

A process of determining a confidence of a target character unit in the preset keyword appearing in the audio frame in the target audio clip may be expressed by the following program: 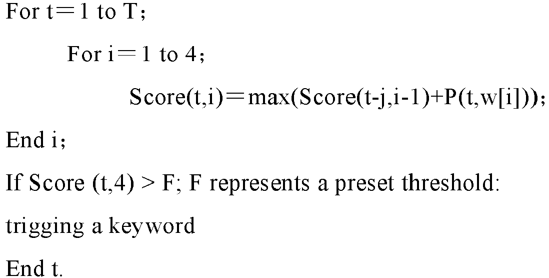 where t represents the t-th audio frame, and T represents the total number of the audio frames in the target audio clip. i represents the i-th target character unit, and 4 represents the total number of target character units included in the preset keyword. Score (t,i) represents a confidence of the i-th target character unit in the preset keyword appearing in the t-th audio frame, and P (t, w [i]) represents a first probability that the t-th audio frame corresponds to the i-th target character unit in the preset keyword; max (Score (t - j,i - 1)+P (t, w [i])) indicates a maximum value of the confidence of the (i-1)th target character unit in the preset keyword appearing in an audio frame before the t-th audio frame and P (t, w [i]), where j is less than t, and typically takes several values closest to t among (t - 1), (t - 2), (t - 3), (t - 4), (t - 5), (t - 6), etc., which may be specifically determined according to the total number of target character units included in the preset keyword.

Step 130: determine, based on the second probability, whether the target audio clip is a voice clip of the preset keyword.

Specifically, the determining, based on the second probability, whether the target audio clip is a voice clip of the preset keyword, may include: if the second probability is greater than a preset threshold, determining that the target audio clip is a voice clip of the preset keyword.

In the keyword detection method provided by embodiments of the present disclosure, after a first probability that a target audio frame corresponds to a target character unit in the preset keyword is determined, a second probability that the preset keyword appears at each moment is then calculated through a dynamic planning algorithm, and whether the preset keyword is detected or not is determined according to whether the second probability reaches a preset threshold, so that the calculation overhead of detecting the preset keyword can be reduced, and the detection efficiency and the detection accuracy for the keyword can be improved. Specifically, determining a first probability that a target audio frame corresponds to a last target character unit in the preset keyword; determining a maximum value of confidences of a second-from-bottom target character unit in the preset keyword appearing in an audio frame before the target audio frame in the target audio clip; and determining the sum of the maximum value and the first probability as a second probability that the preset keyword appears in the target audio frame, and determining, based on the second probability, whether the target audio clip is a voice clip of the preset keyword.

FIG. 2 is a schematic structural diagram of a keyword detection apparatus according to an embodiment of the present disclosure. As shown in FIG. 2, the keyword detection apparatus specifically includes: a first determination module 210, a second determination module 220, and a third determination module 230

Among them, the first determination module 210 is configured to determine, for a target audio clip in a target audio, a first probability that a target audio frame in the target audio clip corresponds to a target character unit, wherein the first probability indicates a probability that the target audio frame is a voice frame of the target character unit, the target character unit is a character unit comprised in a preset keyword, and a position of the target audio frame in the target audio clip corresponds to a position of the target character unit in the preset keyword; the second determination module 220 is configured to determine, based on the first probability, a second probability that the target audio clip corresponds to the preset keyword, the second probability indicating a probability that respective audio frames in the target audio clip are sequentially respective character units in the preset keyword; and the third determination module 230 is configured to determine, based on the second probability, whether the target audio clip is a voice clip of the preset keyword.

Optionally, the first determination module 210 may include a first determination unit, configured to determine an audio feature of the target audio frame; and an input unit configured to input the audio feature into a trained neural network model to obtain the first probability that the target audio frame corresponds to the target character unit.

Optionally, the second determination module 220 may include a second determination unit, configured to determine a first probability that a target audio frame corresponds to a last target character unit in the preset keyword; a third determination unit configured to determine a maximum value of confidences of a second-from-bottom target character unit in the preset keyword appearing in an audio frame before the target audio frame in the target audio clip; and a fourth determination unit configured to determine the sum of the maximum value and the first probability that the target audio frame corresponds to the last target character unit in the preset keyword as the second probability, wherein the target audio frame is any audio frame in the target audio clip.

Optionally, a confidence of one target character unit in the preset keyword appearing in the audio frame is a sum of a target maximum value and a target probability; the target maximum value is a maximum value among confidences of neighbor target character units before the one target character unit in the preset keyword appearing in audio frames before the audio frame, and the target probability is a first probability that the audio frame corresponds to the target character unit.

Optionally, the third determination module 230 is specifically configured to: if the second probability is greater than a preset threshold, determine that the target audio clip is a voice segment of the preset keyword.

Optionally, the character unit includes a Chinese character.

In the keyword detection apparatus provided by embodiments of the present disclosure, after a first probability that a target audio frame corresponds to a target character unit in the preset keyword is determined, a second probability that the preset keyword appears at each moment is then calculated through a dynamic planning algorithm, and whether the preset keyword is detected or not is determined according to whether the second probability reaches a preset threshold, so that the calculation overhead of detecting the preset keyword can be reduced, and the detection efficiency for the keyword can be improved. Specifically, determining a first probability that a target audio frame corresponds to a last target character unit in the preset keyword; determining a maximum value of confidences of a second-from-bottom target character unit in the preset keyword appearing in an audio frame before the target audio frame in the target audio clip; and determining the sum of the maximum value and the first probability as a second probability that the preset keyword appears in the target audio frame, and determining, based on the second probability, whether the target audio clip is a voice clip of the preset keyword.

The keyword detection apparatus provided in the embodiments of the present disclosure may perform the steps in the keyword detection method provided in the method embodiments of the present disclosure, and the steps and beneficial effects are not described herein again.

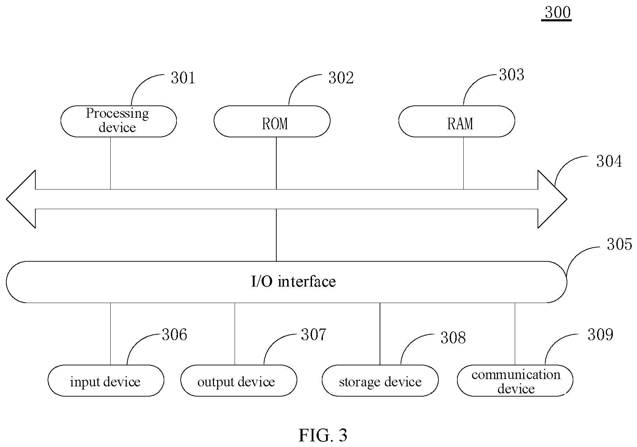

FIG. 3 is a schematic structural diagram of an electronic device. Hereinafter specifically referring to FIG. 3, which illustrates the schematic structural diagram applicable to implement electronic device 300 in the embodiments of the present disclosure. The electronic devices 300 in the embodiments of the present disclosure may include, but not limited to, mobile terminals such as mobile phones, notebook computers, digital broadcast receivers, PDAs (personal digital assistants), PAD (tablet computers), PMP (portable multimedia players), vehicle-mounted terminals (for example, vehicle-mounted navigation terminals), etc., and fixed terminals such as digital TVs, desktop computers, and the like. The electronic device shown in Fig. 3 is only an example, and should not impose any restriction on the functions and application scopes of the embodiments of the present disclosure.

As shown in Fig. 3, the electronic device 300 can include a processing apparatus (such as a central processing unit, a graphics processor, etc.) 301, which can perform various appropriate actions and processes according to a program stored in a Read Only Memory (ROM) 302 or a program loaded into a Random Access Memory (RAM) 303 from a storage device 308. In the RAM 303, various programs and data required for the operation of the electronic device 300 are also stored. The processing device 301, ROM 302 and RAM 303 are connected to each other through a bus 304. An input/output (I/O) interface 305 is also connected to the bus 304.

Generally, the following devices can be connected to the I/O interface 305: an input device 306 including, for example, touch screen, touch pad, keyboard, mouse, camera, microphone, accelerometer, gyroscope, etc.; an output device 307 such as Liquid Crystal Display (LCD), speakers, vibrators, etc.; a storage device 308 including a magnetic tape, a hard disk, etc.; and a communication device 309. The communication device 309 may allow the electronic device 300 to communicate with other devices wirelessly or in wired so as to exchange data. Although an electronic device 300 with various apparatuses is shown, it should be understood that it is not required to implement or have all the devices shown. More or fewer devices may alternatively be implemented or provided.

Particularly, according to embodiments of the present disclosure, the process described above with reference to the flowchart can be implemented as a computer software program. For example, an embodiment of the present disclosure includes a computer program product including a computer program carried on a computer readable medium, the computer program containing program code for executing the method shown in the flowchart. In such an embodiment, the computer program can be downloaded and installed from the network through the communication device 309, or installed from the storage device 308 or from the ROM 302. When executed by the processing device 301, the computer program carries out the above-mentioned functions defined in the method of the embodiment of the present disclosure.

It should be noted that the above-mentioned computer-readable medium in this disclosure can be a computer-readable signal medium or a computer-readable storage medium or any combination of the two. The computer-readable storage medium can be, for example, but not limited to, an electrical, magnetic, optical, electromagnetic, infrared, or semiconductor system, device or equipment, or any combination of the above. More specific examples of computer-readable storage media may include, but not limited to, an electrical connection with one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the above. In the present disclosure, the computer-readable storage medium can be any tangible medium that contains or stores a program that can be used by or in combination with an instruction execution system, device, or equipment. In this disclosure, the computer-readable signal medium may include a data signal propagated in baseband or as a part of a carrier wave, in which computer-readable program code is carried. This propagated data signal can take many forms, including, but not limited to, electromagnetic signals, optical signals, or any suitable combination of the above. The computer-readable signal medium can also be any computer-readable medium other than the computer-readable storage medium, which can send, propagate, or transmit the program for use by or in connection with the instruction execution system, apparatus, or device. The program code contained in the computer-readable medium can be transmitted by any suitable medium, including but not limited to: electric wire, optical cable, RF (radio frequency), etc., or any suitable combination of the above.

In some embodiments, the client and the server can communicate by using any currently known or future developed network protocol such as HTTP (HyperText Transfer Protocol), and can be interconnected with any form or medium of digital data communication (e.g., communication network). Examples of communication networks include a local area network ("LAN"), a wide area network ("WAN"), an internet network (e.g., the Internet) and end-to-end network (e.g., ad hoc end-to-end network), as well as any currently known or future developed networks.

The above-mentioned computer-readable medium may be included in the electronic device; or it can exist alone without being loaded into the electronic device.

The above-mentioned computer-readable medium carries one or more programs, which, when executed by the electronic device, cause the electronic device to execute the following:
determining, for a target audio clip in a target audio, a first probability that a target audio frame in the target audio clip corresponds to a target character unit, wherein the first probability indicates a probability that the target audio frame is a voice frame of the target character unit, the target character unit is a character unit comprised in a preset keyword, and a position of the target audio frame in the target audio clip corresponds to a position of the target character unit in the preset keyword; determining, based on the first probability, a second probability that the target audio clip corresponds to the preset keyword, the second probability indicating a probability that respective audio frames in the target audio clip are sequentially respective character units in the preset keyword; and determining, based on the second probability, whether the target audio clip is a voice clip of the preset keyword.

Computer program codes for performing the operations of the present disclosure can be written in one or more programming languages or a combination thereof, including object-oriented programming languages such as Java, Smalltalk, and C++, as well as conventional procedural programming languages such as "C" language or similar programming languages. The program codes can be completely executed on the user's computer, partially executed on the user's computer, executed as an independent software package, partially executed on the user's computer, and partially executed on the remote computer, or completely executed on the remote computer or server. In a case related to remote computers, the remote computers can be connected to the user computers through any kind of networks, including Local Area Network (LAN) or Wide Area Network (WAN), or can be connected to external computers (for example, through the Internet with Internet service providers).

The flowcharts and block diagrams in the drawings illustrate the architecture, functions, and operations of possible embodiments of systems, methods, and computer program products according to various embodiments of the present disclosure. In this regard, each block in the flowchart or block diagram may represent a module, a program segment, or a part of the code, which contains one or more executable instructions for implementing specified logical functions. It should also be noted that in some alternative implementations, the functions labeled in the blocks may also occur in a different order than those labeled in the drawings. For example, two blocks shown in succession can actually be executed substantially in parallel, and sometimes they can be executed in the reverse order, depending on the functions involved. It should also be noted that each block in the block diagram and/or flowchart, and the combination of blocks in the block diagram and/or flowchart, can be realized by a dedicated hardware-based system that performs specified functions or operations, or can be implemented by a combination of dedicated hardware and computer instructions.

The units described in the embodiments of this disclosure can be realized by software or hardware. In some cases, the name of the unit does not limit the module itself.

The functions described above herein can be at least partially performed by one or more hardware logic components. For example, without limitation, exemplary types of hardware logic components that can be used may include: field programmable gate array (FPGA), application specific integrated circuit (ASIC), application specific standard product (ASSP), system on chip (SOC), complex programmable logic device (CPLD) and so on.

In the context of the present disclosure, a machine-readable medium can be a tangible medium that can contain or store a program for use by or in connection with an instruction execution system, apparatus, or device. The machine-readable medium can be a machine-readable signal medium or a machine-readable storage medium. The machine-readable medium may include, but not limited to, electronic, magnetic, optical, electromagnetic, infrared, or semiconductor systems, devices or equipment, or any suitable combination of the foregoing. More specific examples of machine-readable storage medium may include electrical connections based on one or more wires, portable computer disks, hard disks, random access memories (RAM), read-only memories (ROM), erasable programmable read-only memories (EPROM or flash memories), optical fibers, compact disk read-only memories (CD-ROMs), optical storage devices, magnetic storage devices, or any suitable combination of the above.

According to one or more embodiments of the present disclosure, the present disclosure provides a keyword detection method, including: determining, for a target audio clip in a target audio, a first probability that a target audio frame in the target audio clip corresponds to a target character unit, wherein the first probability indicates a probability that the target audio frame is a voice frame of the target character unit, the target character unit is a character unit comprised in a preset keyword, and a position of the target audio frame in the target audio clip corresponds to a position of the target character unit in the preset keyword; determining, based on the first probability, a second probability that the target audio clip corresponds to the preset keyword, the second probability indicating a probability that respective audio frames in the target audio clip are sequentially respective character units in the preset keyword; and determining, based on the second probability, whether the target audio clip is a voice clip of the preset keyword.

According to one or more embodiments of the present disclosure, in the keyword detection method, optionally, determining a first probability that a target audio frame in the target audio clip corresponds to a target character unit may include determining an audio feature of the target audio frame; and inputting the audio feature into a trained neural network model to obtain the first probability that the target audio frame corresponds to the target character unit.

According to one or more embodiments of the present disclosure, in the keyword detection method, optionally, the determining, based on the first probability, a second probability that the target audio clip corresponds to the preset keyword, may include: determining a first probability that a target audio frame corresponds to a last target character unit in the preset keyword; determining a maximum value of confidences of a second-from-bottom target character unit in the preset keyword appearing in an audio frame before the target audio frame in the target audio clip; and determining the sum of the maximum value and the first probability that the target audio frame corresponds to the last target character unit in the preset keyword as the second probability, wherein the target audio frame is any audio frame in the target audio clip.

According to one or more embodiments of the present disclosure, in the keyword detection method, optionally, a confidence of one target character unit in the preset keyword appearing in the audio frame is a sum of a target maximum value and a target probability; the target maximum value is a maximum value among confidences of neighbor target character units before the one target character unit in the preset keyword appearing in audio frames before the audio frame, and the target probability is a first probability that the audio frame corresponds to the target character unit.

According to one or more embodiments of the present disclosure, in the keyword detection method, optionally, the determining, based on the second probability, whether the target audio clip is a voice clip of the preset keyword, may include: if the second probability is greater than a preset threshold, determining that the target audio clip is a voice segment of the preset keyword.

According to one or more embodiments of the present disclosure, in the keyword detection method, optionally, the character unit may include a Chinese character.

According to one or more embodiments of the present disclosure, the present disclosure provides a keyword detection apparatus including: a first determination module configured to determine, for a target audio clip in a target audio, a first probability that a target audio frame in the target audio clip corresponds to a target character unit, wherein the first probability indicates a probability that the target audio frame is a voice frame of the target character unit, the target character unit is a character unit comprised in a preset keyword, and a position of the target audio frame in the target audio clip corresponds to a position of the target character unit in the preset keyword; a second determination module configured to determine, based on the first probability, a second probability that the target audio clip corresponds to the preset keyword, the second probability indicating a probability that respective audio frames in the target audio clip are sequentially respective character units in the preset keyword; and a third determination module configured to determine, based on the second probability, whether the target audio clip is a voice clip of the preset keyword. According to one or more embodiments of the present disclosure, in the keyword detection apparatus, optionally, the first determination module may include a first determination unit, configured to determine an audio feature of the target audio frame; and an input unit configured to input the audio feature into a trained neural network model to obtain the first probability that the target audio frame corresponds to the target character unit.

According to one or more embodiments of the present disclosure, in the keyword detection apparatus, optionally, the second determination module may include a second determination unit, configured to determine a first probability that a target audio frame corresponds to a last target character unit in the preset keyword; a third determination unit configured to determine a maximum value of confidences of a second-from-bottom target character unit in the preset keyword appearing in an audio frame before the target audio frame in the target audio clip; and a fourth determination unit configured to determine the sum of the maximum value and the first probability that the target audio frame corresponds to the last target character unit in the preset keyword as the second probability, wherein the target audio frame is any audio frame in the target audio clip.

According to one or more embodiments of the present disclosure, in the keyword detection apparatus, optionally, a confidence of one target character unit in the preset keyword appearing in the audio frame is a sum of a target maximum value and a target probability; the target maximum value is a maximum value among confidences of neighbor target character units before the one target character unit in the preset keyword appearing in audio frames before the audio frame, and the target probability is a first probability that the audio frame corresponds to the target character unit.

According to one or more embodiments of the present disclosure, in the keyword detection apparatus, optionally, the third determination module is specifically configured to: if the second probability is greater than a preset threshold, determine that the target audio clip is a voice segment of the preset keyword.

According to one or more embodiments of the present disclosure, in the keyword detection apparatus, optionally, the character unit may include a Chinese character.

According to one or more embodiments of the present disclosure, the present disclosure provides an electronic device, including:
one or more processors;
a storage device, configured to store one or more programs;
wherein the one or more programs, when executed by the one or more processors, cause the one or more processors to implement any of the keyword detection methods as described in the present disclosure.

According to one or more embodiments of the present disclosure, the present disclosure provides a computer-readable storage medium, on which a computer program is stored, wherein the program, when executed by a processor, implements any of the keyword detection methods as described in the present disclosure.

Embodiments of the present disclosure further provide a computer program product including computer programs and instructions, which, when executed by a processor, implement any of the keyword detection methods as described in the present disclosure.

The above description is only a preferred embodiment of the present disclosure and an illustration of the applied technical principles.

In addition, while operations are depicted in a particular order, this should not be understood as requiring that the operations be performed in the particular order shown or to be performed in sequential order. Under certain circumstances, multitasking and parallel processing may be advantageous. Likewise, while the above discussion contains several specific implementation details, these should not be construed as limitations on the scope of the present disclosure. Certain features that are described in the context of separate embodiments can also be implemented in combination in a single embodiment. Conversely, various features that are described in the context of a single embodiment can also be implemented in multiple embodiments separately or in any suitable subcombination.

Although the subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A keyword detection method, comprising:
determining (110), for a target audio clip in a target audio, a first probability that a target audio frame in the target audio clip corresponds to a target character unit, wherein the first probability indicates a probability that the target audio frame is a voice frame of the target character unit, the target character unit is a character unit comprised in a preset keyword, and a position of the target audio frame in the target audio clip corresponds to a position of the target character unit in the preset keyword;
determining (120), based on the first probability, a second probability that the target audio clip corresponds to the preset keyword, the second probability indicating a probability that respective audio frames in the target audio clip sequentially correspond to respective corresponding character units in the preset keyword; and
determining (130), based on the second probability, whether the target audio clip is a voice clip of the preset keyword,
wherein, the determining (120), based on the first probability, a second probability that the target audio clip corresponds to the preset keyword, comprises:
determining a first probability that a target audio frame corresponds to a last target character unit in the preset keyword;
determining a maximum value of confidences of a second-from-bottom target character unit in the preset keyword appearing in an audio frame before the target audio frame in the target audio clip; and
determining the sum of the maximum value and the first probability that the target audio frame corresponds to the last target character unit in the preset keyword as the second probability;
wherein the target audio frame is any audio frame in the target audio clip.

2. The method of claim 1, wherein, the determining (110), for a target audio clip in a target audio, a first probability that a target audio frame in the target audio clip corresponds to a target character unit, comprises:
determining an audio feature of the target audio frame; and
inputting the audio feature into a trained neural network model to obtain the first probability that the target audio frame corresponds to the target character unit.

3. The method of claim 1, wherein, a confidence of one target character unit in the preset keyword appearing in an audio frame is a sum of a target maximum value and a target probability;
wherein the target maximum value is a maximum value among confidences of neighbor target character units before the one target character unit in the preset keyword appearing in audio frames before the audio frame, and
wherein the target probability is a first probability that the audio frame corresponds to the target character unit.

4. The method of claim 1, wherein, the determining (130), based on the second probability, whether the target audio clip is a voice clip of the preset keyword, comprises:
if the second probability is greater than a preset threshold, determining that the target audio clip is a voice clip of the preset keyword.

5. The method of any of claims 1-4, wherein, the character unit comprises a Chinese character.

6. A keyword detection apparatus, comprising:
a first determination module (210) configured to determine, for a target audio clip in a target audio, a first probability that a target audio frame in the target audio clip corresponds to a target character unit, wherein the first probability indicates a probability that the target audio frame is a voice frame of the target character unit, the target character unit is a character unit comprised in a preset keyword, and a position of the target audio frame in the target audio clip corresponds to a position of the target character unit in the preset keyword;
a second determination module (220) configured to determine, based on the first probability, a second probability that the target audio clip corresponds to the preset keyword, the second probability indicating a probability that respective audio frames in the target audio clip sequentially correspond to respective corresponding character units in the preset keyword; and
a third determination module (230) configured to determine, based on the second probability, whether the target audio clip is a voice clip of the preset keyword,
wherein the second determination module (220) comprises:
a second determination unit, configured to determine a first probability that a target audio frame corresponds to a last target character unit in the preset keyword;
a third determination unit configured to determine a maximum value of confidences of a second-from-bottom target character unit in the preset keyword appearing in an audio frame before the target audio frame in the target audio clip; and
a fourth determination unit configured to determine the sum of the maximum value and the first probability that the target audio frame corresponds to the last target character unit in the preset keyword as the second probability,
wherein the target audio frame is any audio frame in the target audio clip.

7. The apparatus of claim 6, wherein the first determination module comprises:
a first determination unit, configured to determine an audio feature of the target audio frame; and
an input unit configured to input the audio feature into a trained neural network model to obtain the first probability that the target audio frame corresponds to the target character unit.

8. The apparatus of claim 6, wherein a confidence of one target character unit in the preset keyword appearing in the audio frame is a sum of a target maximum value and a target probability; wherein the target maximum value is a maximum value among confidences of neighbor target character units before the one target character unit in the preset keyword appearing in audio frames before the audio frame, and wherein the target probability is a first probability that the audio frame corresponds to the target character unit.

9. The apparatus of claim 6, wherein the third determination module is configured to: if the second probability is greater than a preset threshold, determine that the target audio clip is a voice segment of the preset keyword.

10. The apparatus of any one of claims 6-9, wherein the character unit may include a Chinese character.

11. An electronic device, comprising:
one or more processors;
a storage device configured to store one or more programs;
wherein, the one or more programs, when executed by the one or more processors, cause the one or more processors to implement the method of any one of claims 1-5.

12. A computer-readable storage medium having a computer program stored thereon, wherein the computer program, when executed by a processor, causes the processor to implement the method of any one of claims 1-5.

13. A computer program product comprising a computer program, which, when executed by a processor, causes the processor to implement the method of any one of claims 1-5.

## Patentansprüche

1. Verfahren zur Schlüsselworterkennung, umfassend:
Bestimmen (110) für einen Ziel-Audioclip in einem Ziel-Audio einer ersten Wahrscheinlichkeit, dass ein Ziel-Audioframe in dem Ziel-Audioclip einer Ziel-Zeicheneinheit entspricht, wobei die erste Wahrscheinlichkeit eine Wahrscheinlichkeit angibt, dass der Ziel-Audioframe ein Sprachframe der Ziel-Zeicheneinheit ist, die Ziel-Zeicheneinheit eine Zeicheneinheit ist, die in einem voreingestellten Schlüsselwort umfasst ist, und eine Position des Ziel-Audioframes im Ziel-Audioclip einer Position der Ziel-Zeicheneinheit im voreingestellten Schlüsselwort entspricht;
Bestimmen (120), basierend auf der ersten Wahrscheinlichkeit, einer zweiten Wahrscheinlichkeit, dass der Ziel-Audioclip dem voreingestellten Schlüsselwort entspricht, wobei die zweite Wahrscheinlichkeit eine Wahrscheinlichkeit angibt, dass jeweilige Audioframes im Ziel-Audioclip sequenziell den jeweiligen Zeicheneinheiten im voreingestellten Schlüsselwort entsprechen; und
Bestimmen (130), basierend auf der zweiten Wahrscheinlichkeit, ob der Ziel-Audioclip ein Sprachclip des voreingestellten Schlüsselworts ist,
wobei das Bestimmen (120), basierend auf der ersten Wahrscheinlichkeit einer zweiten Wahrscheinlichkeit, dass der Ziel-Audioclip dem voreingestellten Schlüsselwort entspricht, umfasst:
Bestimmen einer ersten Wahrscheinlichkeit, dass ein Ziel-Audioframe einer letzten Ziel-Zeicheneinheit im voreingestellten Schlüsselwort entspricht;
Bestimmen eines maximalen Konfidenzwertes einer vorletzten Ziel-Zeicheneinheit im voreingestellten Schlüsselwort, die in einem Audioframe vor dem Ziel-Audioframe im Ziel-Audioclip erscheint; und
Bestimmen der Summe des Maximalwerts und der ersten Wahrscheinlichkeit, dass der Ziel-Audioframe der letzten Ziel-Zeicheneinheit im voreingestellten Schlüsselwort entspricht, als die zweite Wahrscheinlichkeit;
wobei der Ziel-Audioframe ein beliebiger Audioframe im Ziel-Audioclip ist.

2. Verfahren nach Anspruch 1, wobei das Bestimmen (110), für einen Ziel-Audioclip in einem Ziel-Audio, einer ersten Wahrscheinlichkeit, dass ein Ziel-Audioframe in dem Ziel-Audioclip einer Ziel-Zeicheneinheit entspricht, umfasst:
Bestimmen eines Audiomerkmals des Ziel-Audioframes; und
Eingeben des Audiomerkmals in ein trainiertes neuronales Netzwerkmodell, um die erste Wahrscheinlichkeit zu erhalten, dass der Ziel-Audioframe der Ziel-Zeicheneinheit entspricht.

3. Verfahren nach Anspruch 1, wobei die Konfidenz einer Ziel-Zeicheneinheit in das voreingestellte Schlüsselwort, das in einem Audioframe erscheint, eine Summe eines maximalen Zielwerts und einer Zielwahrscheinlichkeit ist;
wobei der maximale Zielwert ein maximaler Wert unter den Konfidenzen benachbarter Ziel-Zeicheneinheiten vor der einen Ziel-Zeicheneinheit im voreingestellten Schlüsselwort ist, die in Audioframes vor dem Audioframe erscheint, und
wobei die Zielwahrscheinlichkeit eine erste Wahrscheinlichkeit ist, dass der Audio-Frame der Ziel-Zeicheneinheit entspricht.

4. Verfahren nach Anspruch 1, wobei das Bestimmen (130), basierend auf der zweiten Wahrscheinlichkeit, ob der Ziel-Audioclip ein Sprachclip des voreingestellten Schlüsselworts ist, umfasst:
wenn die zweite Wahrscheinlichkeit größer als ein voreingestellter Schwellenwert ist, Bestimmen, dass der Ziel-Audioclip ein Sprachclip des voreingestellten Schlüsselworts ist.

5. Verfahren nach einem der Ansprüche 1-4, wobei die Zeicheneinheit ein chinesisches Zeichen umfasst.

6. Einrichtung zur Schlüsselworterkennung, umfassend:
ein erstes Bestimmungsmodul (210), das konfiguriert ist, um für einen Ziel-Audioclip in einem Ziel-Audio eine erste Wahrscheinlichkeit zu bestimmen, dass ein Ziel-Audioframe in dem Ziel-Audioclip einer Ziel-Zeicheneinheit entspricht, wobei die erste Wahrscheinlichkeit eine Wahrscheinlichkeit angibt, dass der Ziel-Audioframe ein Sprachframe der Ziel-Zeicheneinheit ist, die Ziel-Zeicheneinheit eine Zeicheneinheit ist, die in einem voreingestellten Schlüsselwort umfasst ist, und eine Position des Ziel-Audioframes im Ziel-Audioclip einer Position der Ziel-Zeicheneinheit im voreingestellten Schlüsselwort entspricht;
ein zweites Bestimmungsmodul (220), das konfiguriert ist, um basierend auf der ersten Wahrscheinlichkeit, eine zweite Wahrscheinlichkeit zu bestimmen, dass der Ziel-Audioclip dem voreingestellten Schlüsselwort entspricht, wobei die zweite Wahrscheinlichkeit eine Wahrscheinlichkeit angibt, dass jeweilige Audioframes im Ziel-Audioclip sequenziell den jeweiligen Zeicheneinheiten im voreingestellten Schlüsselwort entsprechen; und
ein drittes Bestimmungsmodul (230), das konfiguriert ist, um basierend auf der zweiten Wahrscheinlichkeit zu bestimmen, ob der Ziel-Audioclip ein Sprachclip des voreingestellten Schlüsselworts ist,
wobei das zweite Bestimmungsmodul (220) umfasst:
eine zweite Bestimmungseinheit, die konfiguriert ist, um eine erste Wahrscheinlichkeit zu bestimmen, dass ein Ziel-Audioframe einer letzten Ziel-Zeicheneinheit im voreingestellten Schlüsselwort entspricht;
eine dritte Bestimmungseinheit, die konfiguriert ist, um einen maximalen Konfidenzwert einer vorletzten Ziel-Zeicheneinheit im voreingestellten Schlüsselwort zu bestimmen, die in einem Audioframe vor dem Ziel-Audioframe im Ziel-Audioclip erscheint; und
eine vierte Bestimmungseinheit, die konfiguriert ist, um die Summe des Maximalwerts und der ersten Wahrscheinlichkeit, dass der Ziel-Audioframe der letzten Ziel-Zeicheneinheit im voreingestellten Schlüsselwort entspricht, als die zweite Wahrscheinlichkeit zu bestimmen,
wobei der Ziel-Audioframe ein beliebiger Audioframe im Ziel-Audioclip ist.

7. Einrichtung nach Anspruch 6, wobei das erste Bestimmungsmodul umfasst:
eine erste Bestimmungseinheit, die konfiguriert ist, um ein Audiomerkmal des Ziel-Audioframes zu bestimmen; und
eine Eingabeeinheit, die konfiguriert ist, um das Audiomerkmal in ein trainiertes neuronales Netzwerkmodell einzugeben, um die erste Wahrscheinlichkeit zu erhalten, dass der Ziel-Audioframe der Ziel-Zeicheneinheit entspricht.

8. Einrichtung nach Anspruch 6, wobei eine Konfidenz einer Ziel-Zeicheneinheit in das voreingestellte Schlüsselwort, das im Audioframe erscheint, eine Summe eines maximalen Zielwerts und einer Zielwahrscheinlichkeit ist; wobei der maximale Zielwert der Maximalwert unter Konfidenzen benachbarter Ziel-Zeicheneinheiten vor der einen Ziel-Zeicheneinheit im voreingestellten Schlüsselwort ist, die in Audioframes vor dem Audioframe erscheinen, und wobei die Zielwahrscheinlichkeit eine erste Wahrscheinlichkeit ist, dass der Audioframe der Ziel-Zeicheneinheit entspricht.

9. Einrichtung nach Anspruch 6, wobei das dritte Bestimmungsmodul konfiguriert ist, um: wenn die zweite Wahrscheinlichkeit größer als ein voreingestellter Schwellenwert ist, zu bestimmen, dass der Ziel-Audioclip ein Sprachsegment des voreingestellten Schlüsselworts ist.

10. Einrichtung nach einem der Ansprüche 6-9, wobei die Zeicheneinheit ein chinesisches Zeichen beinhalten kann.

11. Elektronische Vorrichtung, umfassend:
einen oder mehrere Prozessoren;
eine Speichervorrichtung, die konfiguriert ist, um ein oder mehrere Programme zu speichern;
wobei das eine oder mehrere Programme, wenn sie von dem einen oder mehreren Prozessoren ausgeführt werden, den einen oder mehrere Prozessoren veranlassen, das Verfahren nach einem der Ansprüche 1-5 zu implementieren.

12. Computerlesbares Speichermedium, das ein darauf gespeichertes Computerprogramm aufweist, wobei das Computerprogramm, wenn es von einem Prozessor ausgeführt wird, den Prozessor veranlasst, das Verfahren nach einem der Ansprüche 1-5 zu implementieren.

13. Computerprogrammprodukt, das ein Computerprogramm umfasst, das, wenn es von einem Prozessor ausgeführt wird, den Prozessor veranlasst, das Verfahren nach einem der Ansprüche 1-5 zu implementieren.

## Revendications

1. Procédé de détection de mots-clés, comprenant :
la détermination (110), pour un clip audio cible dans un audio cible, d'une première probabilité qu'une trame audio cible dans le clip audio cible corresponde à une unité de caractère cible, dans laquelle la première probabilité indique une probabilité que la trame audio cible est une trame vocale de l'unité de caractère cible, que l'unité de caractère cible est une unité de caractère comprise dans un mot-clé prédéfini et qu'une position de la trame audio cible dans le clip audio cible corresponde à une position de l'unité de caractère cible dans le mot-clé prédéfini ;
la détermination (120), sur la base de la première probabilité, d'une seconde probabilité que le clip audio cible corresponde au mot-clé prédéfini, la seconde probabilité indiquant une probabilité que les trames audio respectives du clip audio cible correspondent séquentiellement aux unités de caractères correspondantes respectives du mot-clé prédéfini ; et
la détermination (130), sur la base de la deuxième probabilité, si le clip audio cible est un clip vocal du mot-clé prédéfini,
dans lequel la détermination (120), sur la base de la première probabilité, d'une seconde probabilité que le clip audio cible corresponde au mot-clé prédéfini, comprend :
la détermination d'une première probabilité qu'une trame audio cible corresponde à une dernière unité de caractère cible dans le mot-clé prédéfini ;
la détermination d'une valeur maximale parmi les confiances d'une unité de caractère cible avant-dernière du mot-clé prédéfini apparaissant dans une trame audio précédant la trame audio cible dans le clip audio cible ; et
la détermination de la somme de la valeur maximale et de la première probabilité que la trame audio cible corresponde à la dernière unité de caractère cible dans le mot-clé prédéfini comme deuxième probabilité ;
dans laquelle la trame audio cible est n'importe quelle trame audio du clip audio cible.

2. Procédé selon la revendication 1, dans lequel la détermination (110), pour un clip audio cible dans un enregistrement audio cible, d'une première probabilité qu'une trame audio cible dans le clip audio cible corresponde à une unité de caractère cible, comprend :
la détermination d'une caractéristique audio de la trame audio cible ; et
l'introduction de la caractéristique audio dans un modèle de réseau neuronal entraîné afin d'obtenir la première probabilité que la trame audio cible corresponde à l'unité de caractère cible.

3. Procédé selon la revendication 1, dans lequel la confiance d'une unité de caractère cible dans le mot-clé prédéfini apparaissant dans une trame audio est la somme d'une valeur maximale cible et d'une probabilité cible ;
dans laquelle la valeur maximale cible est une valeur maximale parmi les confiances des unités de caractères cibles voisines précédant l'unité de caractère cible dans le mot-clé prédéfini apparaissant dans les trames audio précédant la trame audio, et
dans laquelle la probabilité cible est une première probabilité que la trame audio corresponde à l'unité de caractère cible.

4. Procédé selon la revendication 1, dans lequel la détermination (130), sur la base de la seconde probabilité, si l'extrait audio cible est un extrait vocal du mot-clé prédéfini, comprend :
si la deuxième probabilité est supérieure à un seuil prédéfini, la détermination que le clip audio cible est un clip vocal du mot-clé prédéfini.

5. Procédé selon l'une quelconque des revendications 1-4, dans lequel l'unité de caractère comprend un caractère chinois.

6. Appareil de détection de mots clés, comprenant :
un premier module de détermination (210) configuré pour déterminer, pour un clip audio cible dans un audio cible, une première probabilité qu'une trame audio cible dans le clip audio cible corresponde à une unité de caractère cible, dans laquelle la première probabilité indique une probabilité que la trame audio cible est une trame vocale de l'unité de caractère cible, que l'unité de caractère cible est une unité de caractère comprise dans un mot-clé prédéfini, et qu'une position de la trame audio cible dans le clip audio cible corresponde à une position de l'unité de caractère cible dans le mot-clé prédéfini ;
un deuxième module de détermination (220) configuré pour déterminer, sur la base de la première probabilité, une deuxième probabilité que le clip audio cible corresponde au mot-clé prédéfini, la deuxième probabilité indiquant une probabilité que les trames audio respectives du clip audio cible correspondent séquentiellement aux unités de caractères correspondantes respectives du mot-clé prédéfini ; et
un troisième module de détermination (230) configuré pour déterminer, sur la base de la deuxième probabilité, si le clip audio cible est un clip vocal du mot-clé prédéfini,
dans lequel le deuxième module de détermination (220) comprend :
une seconde unité de détermination, configurée pour déterminer une première probabilité qu'une trame audio cible corresponde à une dernière unité de caractère cible dans le mot-clé prédéfini ;
une troisième unité de détermination configurée pour déterminer une valeur maximale des confiances d'une unité de caractère cible avant-dernière dans le mot-clé prédéfini apparaissant dans une trame audio précédant la trame audio cible dans le clip audio cible ; et
une quatrième unité de détermination configurée pour déterminer la somme de la valeur maximale et de la première probabilité que la trame audio cible corresponde à la dernière unité de caractère cible dans le mot-clé prédéfini comme deuxième probabilité,
dans laquelle la trame audio cible est n'importe quelle trame audio du clip audio cible.

7. Appareil selon la revendication 6, dans lequel le premier module de détermination comprend :
une première unité de détermination, configurée pour déterminer une caractéristique audio de la trame audio cible ; et
une unité d'entrée configurée pour introduire la caractéristique audio dans un modèle de réseau neuronal entraîné afin d'obtenir la première probabilité que la trame audio cible corresponde à l'unité de caractère cible.

8. Appareil selon la revendication 6, dans lequel la confiance d'une unité de caractère cible dans le mot-clé prédéfini apparaissant dans la trame audio est la somme d'une valeur maximale cible et d'une probabilité cible ; dans lequel la valeur maximale cible est une valeur maximale parmi les confiances des unités de caractères cibles voisines précédant l'unité de caractère cible dans le mot-clé prédéfini apparaissant dans les trames audio précédant la trame audio, et dans lequel la probabilité cible est une première probabilité que la trame audio corresponde à l'unité de caractère cible.

9. Appareil selon la revendication 6, dans lequel le troisième module de détermination est configuré pour : si la deuxième probabilité est supérieure à un seuil prédéfini, déterminer que le clip audio cible est un segment vocal du mot-clé prédéfini.

10. Appareil selon l'une quelconque des revendications 6-9, dans lequel l'unité de caractère peut inclure un caractère chinois.

11. Dispositif électronique, comprenant :
un ou plusieurs processeurs ;
un dispositif de stockage configuré pour stocker un ou plusieurs programmes ;
dans lequel, le un ou plusieurs programmes, lorsqu'ils sont exécutés par le ou les processeurs, amènent le un ou plusieurs processeurs à mettre en œuvre le procédé selon l'une quelconque des revendications 1-5.

12. Support de stockage lisible par ordinateur sur lequel est stocké un programme informatique, dans lequel le programme informatique, lorsqu'il est exécuté par un processeur, amène le processeur à mettre en œuvre le procédé selon l'une quelconque des revendications 1-5.

13. Produit de programme d'ordinateur comprenant un programme informatique qui, lorsqu'il est exécuté par un processeur, amène le processeur à mettre en œuvre le procédé selon l'une quelconque des revendications 1-5.
